# EUROPEAN PATENT SPECIFICATION

(11) **EP 1 843 655 B1**
(45) Date of publication and mention of the grant of the patent: **29.12.2010**
(21) Application number: 05809448.3
(22) Date of filing: 10.10.2005
(51) Int. Cl.: A01G 9/10, A01G 1/00

(54) **METHOD FOR MAKING A TURF**
VERFAHREN ZUR HERSTELLUNG EINES RASENS
METHODE DE FABRICATION D'UNE PELOUSE

(30) Priority: 24.12.2004 IT PI20040099
(43) Date of publication of application: 17.10.2007
(73) Proprietor: Pacini, Maurizio, 56010 San Giuliano Terme (IT); Volterrani, Marco, 56010 Arena Metalo (IT)
(72) Inventor: Pacini, Maurizio, 56010 San Giuliano Terme (IT); Volterrani, Marco, 56010 Arena Metalo (IT)
(74) Representative: Celestino, Marco
(86) International application number: PCT/IB2005/003000
(87) International publication number: WO 2006/067557

(56) References cited:
- GB-A- 938 170
- GB-A- 1 296 746
- US-A- 5 187 894

## Description

### Field of the invention

The present invention relates to a method for making a turf for sporting, recreational or ornamental purposes. For example, a turf according to the invention can be used as a surface on which to play sports like golf, soccer, tennis, hockey, football, athletics, rugby, baseball and other sports that require turf fields, as well as for ornamental use.

### Background of the invention

Traditional systems are well known for making turfs that provide a preliminary step of working the ground (ploughing, digging, milling) and refining it with complementary work (harrowing) and rolling it in order to provide an optimal sowing bed. A step follows of creating a turf chosen among direct sowing, transplanting parts of plants, laying turf sods or providing rolls of ready-to-lay turf. However, such methods have different drawbacks, as outlined below.

In case of direct sowing, various are the risks of failure of the operation, among which predation by birds and ants or lose the seeds in case of storms. Furthermore, the seeds germinate with difficulty when water availability is low or the temperature extreme. The young seedlings that germinate from the seeds can be, in the first stages, affected by fungus pathologies. Furthermore, many good varieties of species for turfs are not reproducible from seeds.

In case of use of parts of plants, for example stolons, their conservation is troublesome, and their transportation requires refrigeration. In addition, the stolons have to be spread on the ground and readily filled up with earth and watered frequently.

The technique that provides laying turf sods requires long time of completion and the final turf is not planar for the presence of relief zones at the sods.

The use of rolls of turf that cover completely the ground has the advantage that the turf is ready to use but the method is expensive, because soil has to be removed from the ground of cultivation, and the receiving ground has to be cleaned from vegetation as well as a preparation work thereof is necessary.

Furthermore, techniques exist for cultivation into moulds of not grassy plants and ground cover plants with exclusively ornamental function. These plants once grown up to a predetermined size are planted on flowerbeds, usually in private or public gardens. These techniques of cultivation are, however, suitable only to particular types of plant species, owing to long time required before having adequate sprouting on the plantation site. For this reason, ground cover plants cannot be used when they are subject to walking and wearing action, such as surfaces of sport fields that require to be ready and available for playing in a short time.

One of the problems met in regenerating turfs is that the starting ground is a firm ground. Effective methods do not exist, in particular, for regenerating turfs directly on firm ground, since it is necessary to till the exhausted parts and sowing them again, causing the whole surface of the turf to be unavailable for all the time.

GB 1 296 746 discloses a method for making a turf as in the preamble of claim 1.

### Summary of the invention

It is therefore a feature of the present invention to provide a method for making a turf capable to overcome the difficulties of the prior art.

It is another feature of the present invention to provide a method for making a turf to assist the operations of carrying and planting desired plant species on a final site.

It is also a feature of the present invention to provide a method for making turfs capable to avoid the production of weeds on the ground that is going to receive desired plant species.

It is another feature of the present invention to provide a method for making turfs for putting desired plant species on a plantation site, also on firm ground and without the need to carry out preliminary work also in case of ground treated with herbicidal, cleared from weed, or subject to other treatments.

It is still a feature of the present invention to provide a method for making a turf that can be carried out even with bad weather.

These and other objects are achieved with the method for making a turf, according to the present invention, comprising the steps of:
- prearranging a seedling tray having a plurality of cells;
- introducing a measured amount of growth substrate in said cells;
- arranging at least one seed or plant portion of a plant species into the growth substrate of each cell;
- raising in each cell at least one seedling provided with a root plug developed in the substrate forming a molded root plug with shape corresponding to the cell;
- carrying out a transplantation and vegetative propagation on the plantation site of said at least one seedling along with its molded root plug,
- wherein the plant species belongs to a family of
herbaceous plants, characterised in that:
- said plantation step is selected from the group comprised of scatter planting and row planting,
- after said plantation step seedlings grow on said surface of said plantation site through said step of vegetative propagation
- the maximum width of said molded root plugs is set between 1 mm and 10 cm, and, in particular, have a maximum width set between 5 mm and 5 cm, and
- said molded root plugs have a height set between 1 mm and 10 cm and, in particular, have a height set between 5 mm and 5 cm.

Preferably, the plant species is selected from the group comprised of: the following plants, or families of herbaceous plants:
- Graminaceae,
- Convonvulaceae, in particular, Dichondra repens. Preferably, the graminaceae are chosen among;
- Stoloniferous plants,
- Rhizomatous plants,
- Cool-season grasses, in particular, Lolium perenne, Poa pratensis, Festuca arundinacea,
- Warm-season grasses, in particular, Cyanodon dactylon, Zoysia japonica, Paspalum vaginatum.

In a preferred embodiment, the step of arranging at least one seed on the growth substrate provides the step of making at least one impression on the substrate at which the seed is arranged.

In particular, on the surface of the substrate a plurality of spaced impressions are made, for example arranged along a circumference of predetermined diameter.

Advantageously, the vegetative propagation of the plant species is carried out by stolonization.

Preferably, the growth substrate can be selected from the group comprised of:
- organic material, in particular, peat, coconut, compost,
- agricultural waste,
- inorganic material, in particular, volcanic rock, pumice, zeolite, vermiculite or perlite,
- mixture between organic material and inorganic material.

Preferably, in case of arranging seeds in the cells, a preferred ratio between the number of seeds and the maximum width (cm) of the molded root plugs is set about 1 to 2.

Advantageously, in case of arranging parts of plants in the cells the following steps are provided:
- breaking a plant into a a plurality of plant portions;
- mixing said plurality of plant portions with soil or other substrate obtaining a mixture substrate-plant portions;
- distributing the mixture substrate-plant portions in the cells.

Preferably, in case of scatter planting a step is provided of distributing seedlings with their molded root plugs on the surface of the plantation site with or without a step of filling them with earth.

This type of vegetative propagation, similar to scatter seeding, allows the use of hybrid species, for which seeds are unavailable, and is particularly indicated in case of stoloniferous plants, or rhizomatous plants.

The method for making turfs as above described offers, furthermore, a vegetative propagation without preliminarily working the ground. The seedlings obtained by means of cultivation in the trays can be easily transported and stored by means of cryogenic systems, partially dehydrated, vacuum stored, stored in a refrigerator, or by a combination of such techniques.

### Brief description of the drawings

The method according to the invention will now shown with the following description of an embodiment thereof, exemplifying but not limitative, with reference to the attached drawings wherein:
- figure 1 shows diagrammatically a perspective view of a possible embodiment of a seedling tray that can be used for carrying out the method for making a turf, according to the present invention,
- figure 2 shows the seedling tray of figure 1 in a cross sectional view according to arrows II-II,
- figure 3 shows diagrammatically a perspective view of an alternative exemplary embodiment of the seedling tray of figure 1,
- figure 4 shows the seedling tray of figure 3 in a cross sectional view according to arrows IV-IV,
- figure 5 shows the seedling tray of figure 1 in a cross sectional view showing diagrammatically some of the steps of the method according to the invention,
- figure 6 shows a perspective elevation front view of a seedling raised in the seedling tray of figure 1,
- figure 7 shows a perspective elevational front view of a tool that can be used to impress a substrate surface for seeds according to the invention,
- figure 8 shows diagrammatically a perspective view of a plurality of holes made by the tool of figure 7,
- figure 9 shows a cross sectional view of the profile of the substrate after the use of the tool of figure 8,
- figure 10 shows diagrammatically a perspective view of a possible type way of planting steo of the seedling of figure 6 in a plantation site,
- figure 11 shows diagrammatically a perspective view of a possible vegetative propagation step for laying on the ground the seedlings;
- figure 12 shows diagrammatically a perspective view of a step of scattering the seedlings with their molded root plugs alternative to that of figure 11.

### Description of a preferred exemplary embodiment

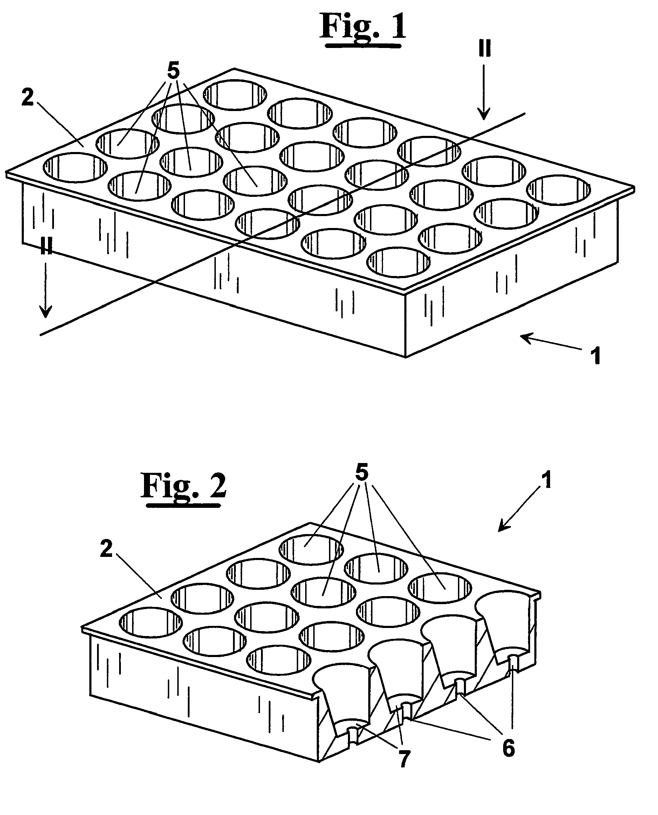

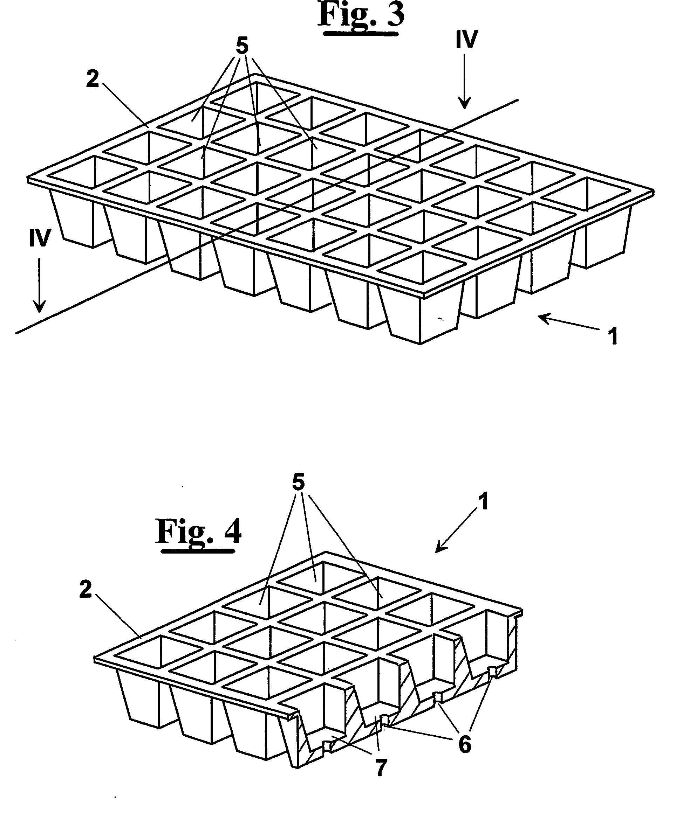

With reference to figures from 1 to 4, the method for making a turf, according to the invention, provides a seedling tray 1, for example of plastic material. It has a plurality of cells 5 having flaring shape (figures 1 and 2), or alternatively, prismatic shape (figures 3 and 4). Each cell 5 has a hole 6 on a basis 7 suitable for allowing irrigation water to flow away throughout cultivation of plant species.

In particular, the method for making turfs provides the introduction in each cell 5 a measured amount of growth substrate 13 containing nutritive substances necessary to raise a seedling 10 of herbaceous species ready for being planted in a plantation site 20, once achieved a desired maturation. Seedlings 10 can be obtained starting from seeds 16, or alternatively, starting from parts of plants. The cultivation in the seedling tray 1 carried out starting from parts of plants is particularly advantageous when seeds of the plant are unavailable, for example in case of hybrid species.

Some substances used as growth substrate 13 comprise organic material, such as peat, coconut, compost, agricultural waste, or inorganic material, for example volcanic rock, pumice, zeolite, vermiculite, perlite, or a mixture thereof.

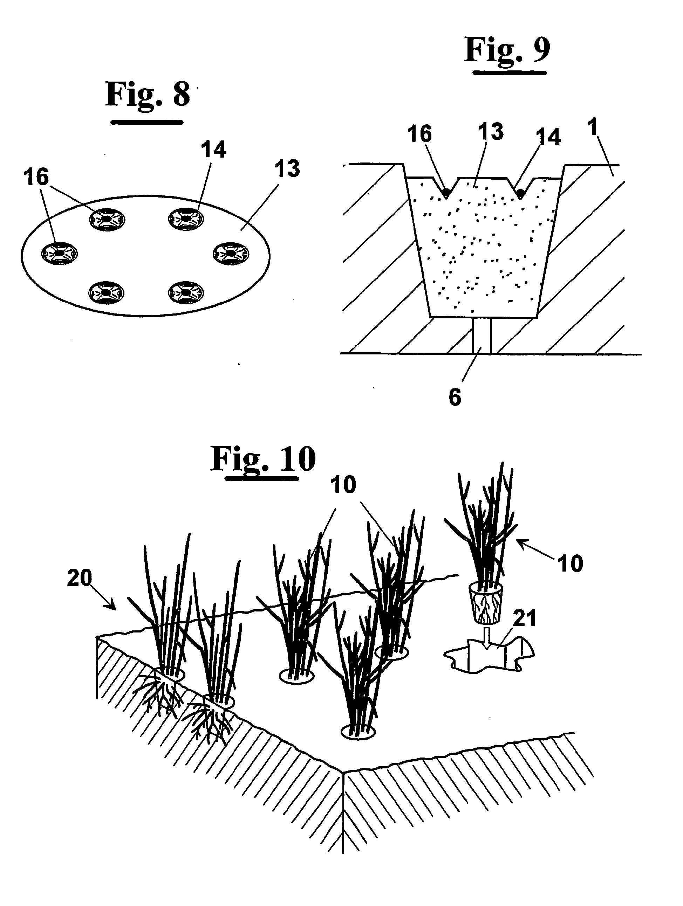

Once achieved a maturation of seedlings 10 they are planted in a desired plantation site 20. A seedling 10 of herbaceous species ready for transplantation has a root 11 grown as a molded root plug 15. Root 11 allows the seedling 10 to adapt even in a ground not much worked and with weather that would be unfavourable for other types of plants. This assists, in particular, the conversion of turfs having cool-season grasses into turfs having warm-season grasses without the need of working the ground. Seedlings 10 are planted in a plantation site 21 made in the ground 20 (figure 10). The use of molded root plugs 15 allows concentrating nutritive substances without scattering them on a wide area, as it is necessary instead for other grass cultivation systems. This way, the risk is avoided of creating conditions that promote the growth of weeds around the cultivated species. The seedlings 10 can be manipulated like large seeds and then can be planted with classic methods used for seeds like scatter planting or row planting or single seedling planting.

In particular, to assist the manipulation, the seedling can be cut, leaving mainly the molded root plug and a short cropped seedling protruding therefrom. Once in the ground, owing to its herbaceous nature, the vegetative propagation of the molded root plug occurs very quickly.

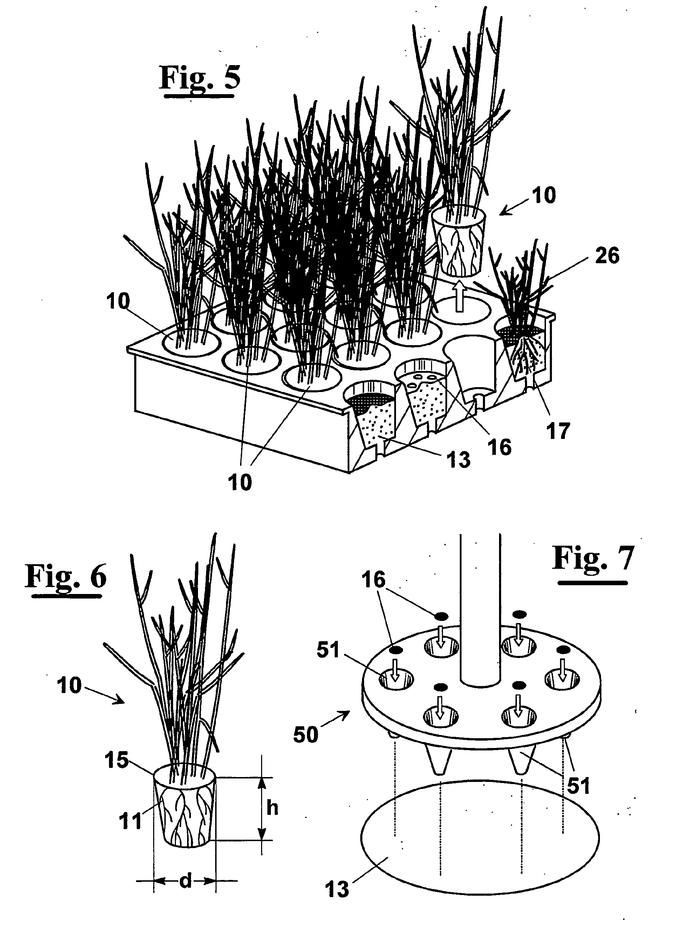

A seedling 10 can be obtained starting from a seed 16 that sprouts and is raised up to a desired maturation. Alternatively, it is possible to start from parts of plants put in a growth substrate 13 (figure 5).

In case of use of seeds 16 a special substantially frustumconical instrument 50 can be used having openings 51 where the seeds 16 come out. The seeds are, this way, spread at a measured distance from one another on the surface of the substrate in order not to interfere with one another while sprouting and growing up to becoming a seedling.

In particular, the molded root plug 15 of seedling 10 provides a maximum width d comprised in a range between 1 mm and 10 cm, and a height h set between 5 mm and 5 cm. Such size of root plugs 15 ensures to store enough nutrients and at the same is small and easy to transport. The seedlings 10, furthermore, owing to their minimum encumbrance can be easily stored by traditional methods such as refrigeration, dehydration, vacuum storage, so that they can be used in different time and places.

Plant species particularly suitable for being cultivated with the method according to the invention are graminaceae, both cool-season grasses, such as Lolium perenne, Poa pratensis, Festuca arundinacea, and warm-season grasses, such as Cyanodon dactylon, Zoysia japonica, Paspalum vaginatum, etc.

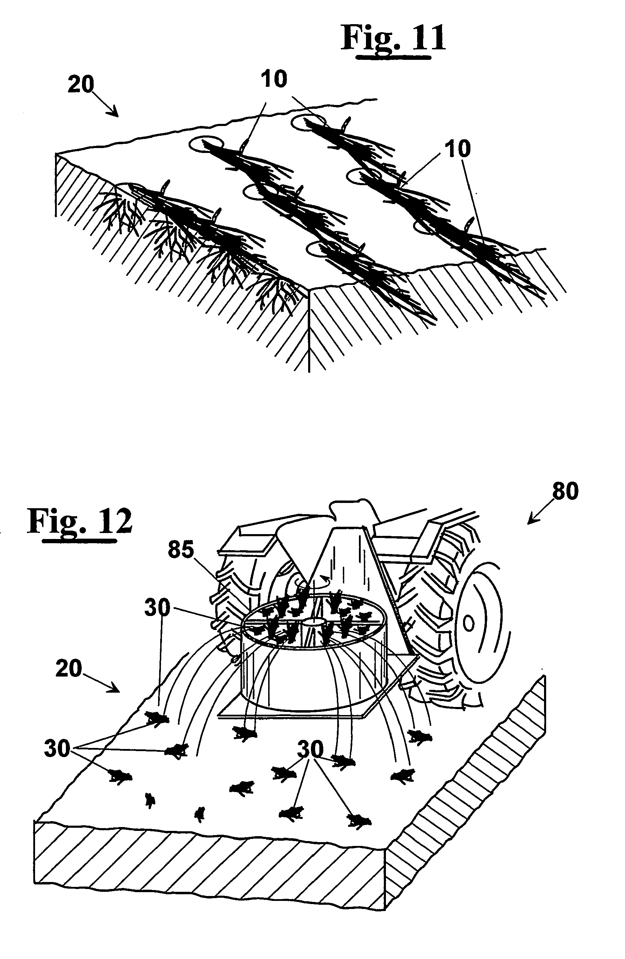

These plant species are in particular, suitable for a vegetative propagation by means of rhizomes or stolons, according to the invention. In figure 11 for example a vegetative propagation step is diagrammatically shown starting from a few seedlings 10, or plant portions, scattered on ground 20, thus covering the whole surface by means of stolonization, i.e. pressing the stolons on the ground, for example by means of special machines having rollers.

Another technique of vegetative propagation that does not provide instead any preliminary work on the plantation site 20 is shown in figure 12. It provides distributing the seedlings with their molded root plugs 30 on the surface of the plantation site 20. This distribution can be executed either manually or with the aid of agricultural machines 80, for example comprising a centrifugal drum 85. This type of vegetative propagation, similar to scatter seeding, is quick and simple to carry out, and provides a rapidity of propagation, even with adverse environmental conditions, thanks to the adopted plant species. Furthermore, the method above described can be used for cultivating hybrid species, for which seeds are not available, by using plant portions thereof.

## Claims

1. Method for making a turf for sporting, recreational or ornamental purposes, comprising the steps of:
- prearranging a seedling tray having a plurality of cells;
- introducing a measured amount of growth substrate in said cells;
- arranging at least one seed or a plant portion of a plant species, into the growth substrate of each cell;
- raising in each cell at least one seedling resulting therefrom, said seedling having a root plug developed in said substrate forming a molded root plug with shape corresponding to said cell;
- carrying out a plantation and vegetative propagation of said seedlings along with said molded root plug on a plantation site,
- wherein said plant species belongs to a family of herbaceous plants,
**characterised in that**
- said plantation step is selected from the group comprised of scatter planting and row planting,
- after said lactation step said seedlings grow on said surface of said plantation site through said step of vegetative propagation to make said turf;
- the maximum width of said molded root plugs is set between 1 mm and 10 cm, and, in particular, have a maximum width set between 5 mm and 5 cm, and
- said molded root plugs have a height set between 1 mm and 10 cm and, in particular, have a height set between 5 mm and 5 cm.

2. Method, according to claim 1, wherein said plant species is selected from the group comprised of the following plants, or families of herbaceous plants:
- Graminaceae,
- convonvulaceae, in particular, Dichondra Repens.

3. Method, according to claim 2, wherein said graminaceae are selected from the group comprised of:
- Stoloniferous plants,
- Rhizomatous plants,
- Cool-season grasses, in particular, Lolium perenne, Poa pratensis, Festuca arundinacea,
- Warm-season grasses, in particular, Cyanodon dactylon, Zoysia japonica, Paspalum vaginatum.

4. Method, according to claim 1, wherein said step of arranging said seeds on said growth substrate provides the step of making at least one impression in said substrate at which is arranged said seed, and, in particular, on the surface of said growth substrate a plurality of spaced impressions are made.

5. Method, according to claim 1, wherein said vegetative propagation of said plant species is carried out by stolonization.

6. Method, according to claim 1, wherein the growth substrate is selected from the group comprised of:
- organic material, in particular, peat, coconut, compost,
- inorganic material, in particular, volcanic rock, pumice, zeolite, vermiculite or perlite,
- a mixture between said organic material and said inorganic material.

7. Method, according to claim 1, wherein in case of arranging seeds in said cells, the ratio between the number of said seeds and the maximum width (cm) of said molded root plugs is set about 1 to 2.

8. Method, according to claim 1, wherein said step of arranging plant portions provides:
- breaking a plant into a plurality of plant portions;
- mixing said plurality of plant portions with soil or other substrate obtaining a mixture of substrate-plant portions;
- distributing said mixture of substrate-plant portions into said cells.

9. Method, according to claim 1, wherein said vegetative propagation is selected from the group comprised of:
- hand planting,
- machine planting,
- planting on firm ground,
- planting on worked ground,

## Patentansprüche

1. Verfahren zur Herstellung eines Rasens für Sport-, Freizeit- oder Zierzwecke, umfassend die Stufen;
- Vorbereiten einer Sämlingsschale bzw. Anzuchtschale mit mehreren Zellen;
- Einführen einer abgemessenen Menge eines Anzuchtsubstrats in die Zellen;
- Ausbringen von mindestens einem Samen oder einem Pflanzenteil einer Pflanzenart in das Anzuchtsubstrat jeder Zelle;
- Heranziehen von mindestens einem daraus erhaltenen Sämling bzw. einer daraus erhaltenen Jungpflanze, wobei die Jungpflanze einen in dem Substrat entwickelten Wurzelballen aufweist, wobei ein geformter Wurzelballen mit einer der Zelle entsprechenden Form gebildet wird;
- Durchführen einer Pflanzung und vegetativen Vermehrung der Jungpflanzen zusammen mit dem geformten Wurzelballen an einem Pflanzort,
- wobei die Pflanzenart zu einer Familie krautartiger Pflanzen gehört,
**dadurch gekennzeichnet, dass**
- die Pflanzungsstufe aus der Gruppe von Streupflanzung und Reihenpflanzung ausgewählt ist,
- nach der Pflanzungsstufe die Jungpflanzen auf der Oberfläche des Pflanzorts über die Stufe einer vegetativen Vermehrung wachsen, wobei der Rasen gebildet wird;
- die maximale Breite der geformten Wurzelballen auf zwischen 1 mm und 10 cm festgelegt ist und diese insbesondere eine auf zwischen 5 mm und 5 cm festgelegte maximale Breite aufweisen, und
- die geformten Wurzelballen eine auf zwischen 1 mm und 10 cm festgelegte Höhe aufweisen und insbesondere eine auf zwischen 5 mm und 5 cm festgelegte Höhe aufweisen.

2. Verfahren nach Anspruch 1, wobei die Pflanzenart aus der Gruppe der folgenden Pflanzen oder Familien krautartiger Pflanzen ausgewählt ist:
Graminaceae,
- Convonvulaceae,
- insbesondere Dichondra Repens.

3. Verfahren nach Anspruch 2, wobei die Gramminaceae ausgewählt sind aus der Gruppe, bestehend aus:
- Stolonen bildenden Pflanzen
- Rhizome bildenden Pflanzen,
- Gräser der kühlen Klimate (cool-season grasses), insbesondere Lolium perenne, Poa pratensis, Festuca arundinacea
- Gräser der warmen Klimate (warm-season grasses), insbesondere Cyanodon dactylon, Zoysia japonica, Paspalum vaginatum.

4. Verfahren nach Anspruch 1, wobei die Stufe des Ausbringens der Samen auf das Anzuchtsubstrat die Stufe der Bildung von mindestens einem Eindruck bzw. einer Eintiefung in das Substrat, in dem der Samen ausgebracht wird, aufweist und insbesondere auf der Oberfläche des Anzuchtsubstrats mehrere beabstandete Eintiefungen gebildet werden.

5. Verfahren nach Anspruch 1, wobei die vegetative Vermehrung der Pflanzenart durch Stolonisation erfolgt.

6. Verfahren nach Anspruch 1, wobei das Anzuchtsubstrat ausgewählt ist aus der Gruppe:
- organischem Material, insbesondere Torf, Kokosnuss, Kompost
- anorganischem Material, insbesondere vulkanische Gestein, Bimsstein, Zeolith, Vermiculit oder Perlit oder
- einem Gemisch aus dem organischen Material und dem anorganischen Material.

7. Verfahren nach Anspruch 1, wobei im Falle des Ausbringens von Samen in die Zellen das Verhältnis zwischen der Anzahl der Samen und der maximalen Breite (cm) der geformten Wurzelballen auf etwa 1 bis 2 festgelegt ist.

8. Verfahren nach Anspruch 1, wobei die Stufe des Ausbringens von Pflanzenteilen die folgenden Stufen aufweist:
- Zerlegen einer Pflanze in mehrere Pflanzenteile
- Mischen von mehreren Pflanzenteilen mit Erde oder einem anderen Substrat, wobei ein Substrat-Pflanzenteile-Gemisch erhalten wird;
- Verteilen des Substrat-Pflanzenteile-Gemischs in die Zellen.

9. Verfahren nach Anspruch 1, wobei die vegetative Vermehrung aus der Gruppe von:
- Handpflanzung,
- Maschinenpflanzung,
- Pflanzung auf festem Boden,
- Pflanzung auf bearbeitetem Boden, ausgewählt ist.

## Revendications

1. Procédé de fabrication d'un gazon en plaques, pour activités sportives, récréationnelles ou à des fins ornementales, comprenant les étapes consistant à :
- préparer une caissette à semis ayant une pluralité de cellules ;
- introduire une quantité mesurée de substrat de croissance dans lesdites cellules ;
- disposer au moins une graine ou une partie de plante d'une espèce végétale dans le substrat de croissance de chaque cellule ;
- cultiver dans chaque cellule au moins un plant résultant de cette culture, ledit plant ayant une racine développée dans ledit substrat formant une racine moulée présentant une forme correspondant à ladite cellule ;
- effectuer une plantation et une propagation végétative desdits plants avec ladite racine moulée sur un site de plantation,
- dans lequel chaque espèce végétale fait partie d'une famille de plantes herbacées,
**caractérisé en ce que**
- ladite étape de plantation est choisie dans le groupe comprenant le semis à la volée et le semis en rangée,
- après ladite étape de plantation, lesdits plants se développent sur ladite surface dudit site de plantation par ladite étape de propagation végétative pour produire ledit gazon en plaque ;
- la largeur maximale desdites racines moulées est fixée entre 1 mm et 10 cm et en particulier, elles ont une largeur maximale fixée entre 5 mm et 5 cm et
- lesdites racines moulées ont une hauteur fixée entre 1 mm et 10 cm et en particulier, ont une hauteur fixée entre 5 mm et 5 cm.

2. Procédé selon la revendication 1, dans lequel ladite espèce végétale est choisie dans le groupe comprenant les plantes suivantes ou familles de plantes herbacées :
- graminées,
- convolvulacées, en particulier *Dichondra Repens*.

3. Procédé selon la revendication 2, dans lequel lesdites graminées sont choisies dans le groupe comprenant :
- les plantes stolonifères,
- les plantes rhizomateuses,
- les herbes de saison froide, en particulier, *Lolium* perenne, *Poa pratensis, Festuca arundinacea,*
- les herbes de saison chaude, en particulier, *Cyanodon dactylon, Zoysia japonica, Paspalum vaginatum.*

4. Procédé selon la revendication 1, dans lequel ladite étape de disposition desdites graines sur ledit substrat de croissance assure l'étape de production d'au moins une empreinte dans ledit substrat au niveau de laquelle est disposée ladite graine et, en particulier, sur la surface dudit substrat de croissance, une pluralité d'empreintes espacées sont produites.

5. Procédé selon la revendication 1, dans lequel ladite propagation végétative de ladite espèce végétale est réalisée par stolonisation.

6. Procédé selon la revendication 1, dans lequel le substrat de croissance est choisi dans le groupe comprenant :
- un matériau organique, en particulier, tourbe, noix de coco, compost,
- un matériau inorganique, en particulier, des roches volcaniques, de la pierre ponce, de la zéolithe, de la vermiculite ou de la perlite,
- un mélange entre ledit matériau organique et ledit matériau inorganique.

7. Procédé selon la revendication 1, dans lequel dans le cas de la disposition des graines dans lesdites cellules, le rapport entre le nombre desdites graines et la largeur maximale (cm) desdites racines moulées est fixé à environ 1 à 2.

8. Procédé selon la revendication 1, dans lequel ladite étape de disposition de parties de plantes assure :
- une coupure d'une plante en une pluralité de parties de plantes ;
- le mélange desdites pluralités de parties de plantes avec de la terre ou un autre substrat pour obtenir un mélange de substrat - parties de plantes ;
- une distribution dudit mélange du substrat - parties de plantes dans lesdites cellules.

9. Procédé selon la revendication 1, dans lequel ladite propagation végétative est choisie dans le groupe comprenant :
- le plantage manuel,
- le plantage à la machine,
- le plantage sur un sol ferme,
- le plantage sur un sol préparé.
